(19)

Europäisches
Patentamt
European
Patent Office
Office européen
des brevets

(11)  **EP 4 650 762 A1**

(12)  **EUROPEAN PATENT APPLICATION**
published in accordance with Art. 153(4) EPC

(43) Date of publication:
**19.11.2025  Bulletin 2025/47**

(21) Application number: **24760244.4**

(22) Date of filing: **15.02.2024**

(51) International Patent Classification (IPC):
**G01N 23/223** (2006.01)    **G01N 23/2209** (2018.01)

(52) Cooperative Patent Classification (CPC):
**G01N 23/2209; G01N 23/223**

(86) International application number:
**PCT/JP2024/005270**

(87) International publication number:
**WO 2024/176943 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.02.2023  JP 2023027359**

(71) Applicant: **Rigaku Corporation
Akishima-shi
Tokyo 196-8666 (JP)**

(72) Inventors:
• **HARA, Shinya
Takatsuki-shi, Osaka 569-1146 (JP)**
• **YAMADA, Yasujiro
Takatsuki-shi, Osaka 569-1146 (JP)**
• **OKAZAKI, Natsumi
Takatsuki-shi, Osaka 569-1146 (JP)**

(74) Representative: **Dr. Gassner & Partner mbB
Wetterkreuz 3
91058 Erlangen (DE)**

(54)  **X-RAY FLUORESCENCE SPECTROMETER**

(57)  In an X-ray fluorescence spectrometer of the present invention, a quantification unit causes a displaying unit to display, as a quantitative-value theoretical standard deviation regarding an analytical component, a difference between a first quantitative value of the analytical component based on measured intensities regarding respective components and a second quantitative value of the analytical component obtained by causing, in calibration curve equations for the respective components, the measured intensities regarding the respective components to fluctuate in a direction in which change in the content of the analytical component increases.

Fig. 1

EP 4 650 762 A1

**Description**

CROSS REFERENCE TO THE RELATED APPLICATION

This application is based on and claims Convention priority to Japanese patent application No. 2023-027359, filed February 24, 2023, the entire disclosure of which is herein incorporated by reference as a part of this application.

BACKGROUND OF THE INVENTION

(Field of the Invention)

The present invention relates to an X-ray fluorescence spectrometer that irradiates a sample with primary X-rays and that obtains, on the basis of measured intensities of fluorescent X-rays generated through the irradiation, a content of a component in the sample by a quantification unit in which a calibration curve method that involves performing absorption/excitation correction and overlap correction is employed or a fundamental parameter method that includes overlap correction is employed.

(Description of Related Art)

Conventionally, X-ray fluorescence spectrometers that perform quantitative analysis are roughly classified into: X-ray fluorescence spectrometers that perform quantitative analysis based on a calibration curve method; and X-ray fluorescence spectrometers that perform quantitative analysis based on a fundamental parameter method (also written as "FP method"). In the quantitative analysis based on the calibration curve method, in order to analyze an unknown sample, a set of standard samples in which contents (also written as "concentrations") of components are known is used to obtain a calibration curve as a correlation between the content of each of the components and the measured intensity of fluorescent X-rays (measurement line) from a measurement element corresponding to the component. The component is an element or a compound. When the component is an element, the element itself is the measurement element corresponding to the component, and meanwhile, when the component is a compound, an element representing the compound is the measurement element corresponding to the component (see, for example, Patent Document 1 (paragraph [0002])).

In the quantitative analysis based on the calibration curve method, absorption/excitation correction (also written as "matrix correction") related to absorption/excitation due to a coexisting element and overlap correction related to overlapping of an interfering line are sometimes performed in addition to background correction related to a background (see, for example, Patent Document 1 (paragraph [0003]) for absorption/excitation correction).

Meanwhile, in the quantitative analysis based on the FP method, a theoretical intensity of fluorescent X-rays generated from each of components in a sample is calculated on the basis of respective assumed contents of the components, and the respective assumed contents of the components are corrected and calculated through successive approximation such that the theoretical intensity matches a post-conversion measured intensity obtained by converting a measured intensity measured by a detection unit into a theoretical intensity scale. Consequently, a content of the component in the sample is calculated. Here, in order to analyze an unknown sample, a set of standard samples in which contents of components are known is used to obtain an instrument sensitivity curve as a correlation between a measured intensity and a theoretical intensity calculated on the basis of the known contents (see, for example, Patent Document 2 (paragraph [0003] and Fig. 4) and Patent Document 1 (paragraph [0009])).

In the quantitative analysis based on the FP method, in principle, absorption/excitation correction is performed on all the components, and as necessary, overlap correction is also performed for some of the components in an instrument sensitivity curve expressed with, for example, the following equation (a) (see, for example, Patent Document 2 (paragraphs [0069] to [0074]) for absorption/excitation correction).

$$I_{Ti}=aI_i{}^3+bI_i{}^2+cI_i+d+\Sigma_j b_O{}^{ij}I_j \cdots \text{(a)}$$

$I_T$: theoretical intensity
I: measured intensity
a, b, c, d: instrument sensitivity constants
i: analytical component
j: overlap correction component
$b_O{}^{ij}$: overlap correction coefficient of component j with respect to component i

In the quantitative analysis based on the calibration curve method, at the time of creating a calibration curve, it is required to, as a criterion for determining whether or not to perform correction, calculate and display a standard deviation of a quantitative value that is obtained from the calibration curve and that is a content of an analytical component. In addition, after the analysis, it is required to, as a reliability of such a quantitative value, calculate and display a standard deviation of the quantitative value.

In the quantitative analysis based on the FP method as well, it is required to, as a criterion for determining whether or not to perform overlap correction, calculate and display a standard deviation of a quantitative value that is obtained through the FP method including the overlap correction, and, after the analysis, it is required to, as a reliability of such a quantitative value, calculate and display a standard deviation of the quantitative value.

In this manner, calculation of a standard deviation in such quantitative analysis that involves performing absorption/excitation correction and overlap correction should be performed in consideration of the fact that an error in analysis of a correction component influences an error in analysis of an analytical component, i.e., in consideration of error propagation to the analytical component due to the correction component. However, there is no method for calculating a quantitative-value theoretical standard deviation (a theoretical standard deviation of a quantitative value), with influence of a correction component being reflected. Thus, to date, analysis is actually performed iteratively on the same sample, and a standard deviation is calculated on the basis of a plurality of obtained quantitative values.

Conventional technologies related to analysis precision as a reliability of a quantitative value include an X-ray fluorescence spectrometer described in, for example, Patent Document 3. In the X-ray fluorescence spectrometer, a measurement time taken to obtain a specified analysis precision is calculated and displayed. However, in this calculation as well, influence of a correction component is not reflected.

[Related Document]

[Patent Document]

| [Patent Document 1] | JP Laid-open Patent Publication No. 2021-51053 |
| [Patent Document 2] | WO2018/168939 |
| [Patent Document 3] | JP Laid-open Patent Publication No. 2000-65765 |

SUMMARY OF THE INVENTION

To date, in quantitative analysis that involves performing absorption/excitation correction and overlap correction, analysis has to be actually performed iteratively on the same sample in order to obtain a standard deviation of a quantitative value with influence of a correction component being reflected, and the iterative analysis takes time. In addition, in the calibration curve method, there is no index for determining whether or not to perform correction at the time of creating a calibration curve before actual analysis, and, in the FP method, there is no index for determining whether or not to perform overlap correction before actual analysis.

The present invention has been made in view of the above conventional problem, and an object of the present invention is to provide an X-ray fluorescence spectrometer that obtains a content of a component in a sample by a quantification unit in which a calibration curve method that involves performing absorption/excitation correction and overlap correction is employed or a fundamental parameter method that includes overlap correction is employed, the spectrometer enabling a quantitative-value theoretical standard deviation to be obtained and displayed within an allowable time without actually performing analysis iteratively, with influence of a correction component being appropriately reflected.

To achieve the object, a first configuration of the present invention is, firstly, an X-ray fluorescence spectrometer including a quantification unit in which a calibration curve method that involves performing absorption/excitation correction and overlap correction is employed, the X-ray fluorescence spectrometer being configured to irradiate a sample with primary X-rays and obtain a content of a component in the sample by the quantification unit on the basis of measured intensities of fluorescent X-rays generated through the irradiation. In addition, the quantification unit obtains, on the basis of measured intensities regarding an analytical component and a correction component, a content of the analytical component from calibration curve equations for the analytical component and the correction component, the content being regarded as a first quantitative value.

Furthermore, the quantification unit causes, in the calibration curve equation for the analytical component, the measured intensity regarding the analytical component to fluctuate by a predetermined amount in a direction in which the content of the analytical component increases or decreases and causes, in the calibration curve equation for the correction component, the measured intensity regarding the correction component to fluctuate by a predetermined amount in a same direction as the direction in which the measured intensity regarding the analytical component has been caused to fluctuate.

Moreover, the quantification unit obtains, on the basis of the measured intensities regarding the analytical component and the correction component and post-fluctuation measured intensities regarding the analytical component and the correction component, a content of the analytical component from the calibration curve equations for the analytical component and the correction component, the content being regarded as a second quantitative value, and causes a displaying unit to display, as a quantitative-value theoretical standard deviation, a difference between the first quantitative value and the second quantitative value.

In the X-ray fluorescence spectrometer according to the first configuration, the quantification unit causes the displaying unit to display, as the quantitative-value theoretical standard deviation regarding the analytical component, the difference between the first quantitative value of the analytical component based on the measured intensities regarding the respective components and the second quantitative value of the analytical component obtained by causing, in the calibration curve equations for the respective components, the measured intensities regarding the respective components to fluctuate in the direction in which change in the content of the analytical component increases. Here, the fluctuation of the measured intensities is caused without considering, in the calibration curve equation for the correction component, change in the content of an additional correction component. Therefore, the quantitative-value theoretical standard deviation regarding the analytical component can be obtained and displayed within an allowable time without actually performing analysis iteratively, with influence of a correction component being appropriately reflected.

A second configuration of the present invention is, firstly, an X-ray fluorescence spectrometer including a quantification unit in which a fundamental parameter method that includes overlap correction is employed, the X-ray fluorescence spectrometer being configured to irradiate a sample with primary X-rays and obtain a content of a component in the sample by the quantification unit on the basis of measured intensities of fluorescent X-rays generated through the irradiation. In addition, the quantification unit obtains, on the basis of measured intensities regarding respective components, contents of the respective components from theoretical intensity equations for the respective components, the contents being regarded as first quantitative values.

Furthermore, the quantification unit increases, in each of the theoretical intensity equations for the respective components, a content of each of components other than an analytical component one by one by a predetermined amount. Then, the quantification unit causes, when a theoretical intensity regarding the analytical component increases to have a value equal to or larger than a predetermined threshold value, fluctuation so as to decrease the measured intensity regarding the component other than the analytical component by a predetermined amount. Meanwhile, the quantification unit causes, when the theoretical intensity regarding the analytical component decreases to have a value equal to or smaller than a predetermined threshold value, fluctuation so as to increase the measured intensity regarding the component other than the analytical component by the predetermined amount.

Moreover, the quantification unit obtains, on the basis of the measured intensities regarding the respective components and post-fluctuation measured intensities regarding the respective components, contents of the respective components from the theoretical intensity equations for the respective components, the contents being regarded as second quantitative values, and causes a displaying unit to display, as a quantitative-value theoretical standard deviation, a difference between the first quantitative value and the second quantitative value of each of the components.

In the X-ray fluorescence spectrometer according to the second configuration, the quantification unit causes the displaying unit to display, as the quantitative-value theoretical standard deviation, the difference between the first quantitative value based on the measured intensities regarding the respective components and the second quantitative value obtained by causing the measured intensities, which inflict significant influences on the theoretical intensities regarding the analytical components in the theoretical intensity equations for the respective components, to fluctuate in the direction in which the contents of the respective analytical components increase. Consequently, the quantitative-value theoretical standard deviation can be obtained and displayed within an allowable time without actually performing analysis iteratively, with influence of a correction component being appropriately reflected.

Any combination of at least two constructions, disclosed in the appended claims and/or the specification and/or the accompanying drawing should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of a preferred embodiment thereof, when taken in conjunction with the accompanying drawing. However, the embodiment and the drawing are given only for the purpose of illustration and explanation, and are not to be taken as limiting the scope of the present invention in any way whatsoever, which scope is to be determined by the appended claims. In the accompanying drawing, like reference numerals are used to denote like parts throughout the several views, and:

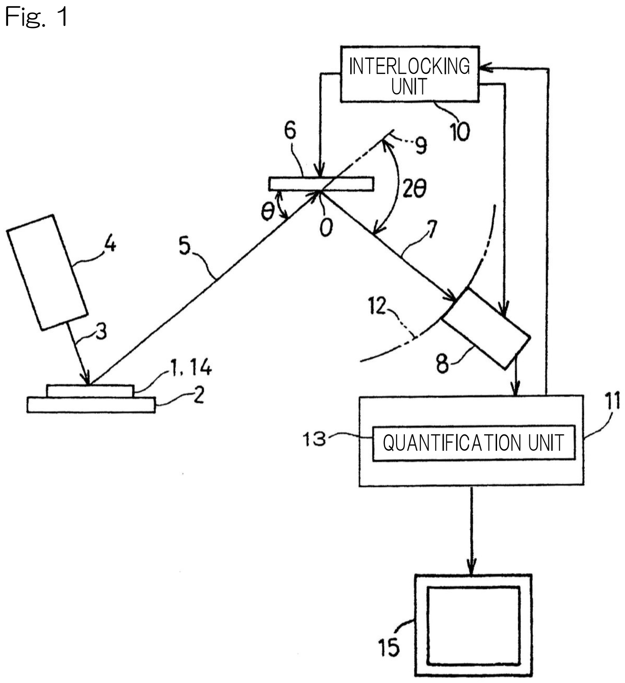

Fig. 1 is a schematic diagram showing an X-ray fluorescence spectrometer according to an embodiment of the present invention.

## DESCRIPTION OF THE EMBODIMENTS

Hereinafter, an X-ray fluorescence spectrometer according to an embodiment of the present invention will be described. As shown in Fig. 1, the X-ray fluorescence spectrometer according to the present embodiment is a sequential X-ray fluorescence spectrometer that irradiates a sample 1, 14 (including both an unknown sample 1 and a standard sample 14) with primary X-rays 3 and that measures intensities of secondary X-rays 5 generated through the irradiation. The X-ray fluorescence spectrometer includes: a sample stage 2 on which the sample 1, 14 is placed; an X-ray source 4 (such as an X-ray tube) which irradiates the sample 1, 14 with the primary X-rays 3; a spectroscopic device 6 which monochromates the secondary X-rays 5 (such as fluorescent X-rays) generated from the sample 1, 14; and a detector 8 on which secondary X-rays 7 obtained through the monochromation by the spectroscopic device 6 are incident and which detects an intensity of the secondary X-rays 7. An output of the detector 8 is input through an amplifier, a pulse height analyzer, a counting unit, and the like which are not shown, to a controller 11 (such as a computer) for controlling the entire spectrometer.

The X-ray fluorescence spectrometer according to the present embodiment is a wavelength dispersive and sequential X-ray fluorescence spectrometer and includes an interlocking unit 10 (i.e., so-called goniometer) which interlocks the spectroscopic device 6 and the detector 8 so as to change the wavelengths of the secondary X-rays 7 to be incident on the detector 8. When the secondary X-rays 5 are incident on the spectroscopic device 6 at a certain incident angle $\theta$, an extension line 9 of the secondary X-rays 5 and the secondary X-rays 7 obtained through the monochromation (diffraction) by the spectroscopic device 6 form a spectroscopic angle $2\theta$ which is 2 times the incident angle $\theta$. The interlocking unit 10 rotates the spectroscopic device 6 about an axis O passing through the center of a surface of the spectroscopic device 6 and perpendicular to the drawing sheet and rotates the detector 8 around the axis O along a circle 12 by an angle that is 2 times the angle of the rotation of the spectroscopic device 6 such that: the spectroscopic angle $2\theta$ is changed so as to change the wavelengths of the secondary X-rays 7 to be obtained through the monochromation; and the secondary X-rays 7 obtained through the monochromation are incident on the detector 8. The value of the spectroscopic angle $2\theta$ ($2\theta$ angle) is input from the interlocking unit 10 to the controller 11. In the present invention, the X-ray fluorescence spectrometer may be a wavelength dispersive and simultaneous multi-elements analysis type X-ray fluorescence spectrometer or may be an energy dispersive X-ray fluorescence spectrometer.

The X-ray fluorescence spectrometer according to the present embodiment includes a quantification unit 13 as a program installed in the controller 11 and obtains, on the basis of measured intensities of the fluorescent X-rays 5, contents of components in the sample 1, 14 by the quantification unit 13 in which a calibration curve method that involves performing absorption/excitation correction and overlap correction is employed. A quantitative-value theoretical standard deviation is obtained as follows. First, the quantification unit 13 obtains, on the basis of measured intensities $I_i$, $I_j$ and $I_k$ regarding an analytical component i and correction components j and k, a content $W_i$ of the analytical component i from calibration curve equations (e.g., the following calibration curve equations (1) to (3)) for the analytical component i and the correction components j and k in the same manner as in a conventional quantification unit. Then, this content $W_i$ of the analytical component i is regarded as a first quantitative value $Q_{i1}$.

$$W_i = (A_i I_i^3 + B_i I_i^2 + C_i I_i + D_i)(1 + C_M^{ji} W_j) + C_O^{ki} W_k \quad \cdots (1)$$

$$W_j = (A_j I_j^3 + B_j I_j^2 + C_j I_j + D_j)(1 + C_M^{kj} W_k) \quad \cdots (2)$$

$$W_k = (A_k I_k^3 + B_k I_k^2 + C_k I_k + D_k) \quad \cdots (3)$$

$W_i$: content of analytical component i
$W_j$, $W_k$: contents of correction components j and k
$I_i$: measured intensity regarding analytical component i
$I_j$, $I_k$: measured intensities regarding correction components j and k
A, B, C, D: calibration curve constants
$C_M^{ji}$: absorption/excitation correction coefficient of component j with respect to component i
$C_O^{ki}$: overlap correction coefficient of component k with respect to component i

Furthermore, the quantification unit 13 causes, in the calibration curve equation (1) for the analytical component i, the measured intensity $I_i$ regarding the analytical component i to fluctuate by a predetermined amount in a direction in which the content $W_i$ of the analytical component i increases or decreases, e.g., a direction in which the content $W_i$ of the

analytical component i increases, such that the measured intensity $I_i$ increases in a case where the value obtained by performing partial differentiation on the right-hand side of the calibration curve equation (1) by the measured intensity $I_i$ is a positive value.

Along with this fluctuation, the quantification unit 13 causes, in each of the calibration curve equations (2) and (3) for the correction components j and k, the corresponding one of the measured intensities $I_j$ and $I_k$ regarding the correction components j and k to fluctuate by a predetermined amount in the same direction as the direction in which the measured intensity $I_i$ regarding the analytical component i has been caused to fluctuate (i.e., in this case, the direction in which the content $W_i$ of the analytical component i increases). The correction component j related to absorption or excitation is such that, in a case where the correction coefficient $C_M^{ji}$ is for absorption correction, increase in the content $W_j$ of the correction component j leads to increase in the content $W_i$ of the analytical component i. Considering this, in a case where the value obtained by performing partial differentiation on the right-hand side of the calibration curve equation (2) by the measured intensity $I_j$ is a positive value, the measured intensity $I_j$ is increased by the corresponding predetermined amount. The overlap correction component is such that decrease in the content $W_k$ of the correction component k leads to increase in the content $W_i$ of the analytical component i. Considering this, in a case where the value obtained by performing partial differentiation on the right-hand side of the calibration curve equation (3) by the measured intensity $I_k$ is a positive value, the measured intensity $I_k$ is decreased by the corresponding predetermined amount. Here, the predetermined amounts by which the fluctuation is caused are theoretical standard deviations $\sigma I_i$, $\sigma I_j$ and $\sigma I_k$ of the respective measured intensities $I_i$, $I_j$ and $I_k$ and are each obtained by using a measurement time $t_{meas}$, according to $\sigma I = (I/1000 t_{meas})^{1/2}$.

Moreover, the quantification unit 13 obtains, on the basis of a set of, the measured intensities $I_i$, $I_j$ and $I_k$ regarding the analytical component i and the correction components j and k, and post-fluctuation measured intensities $I_i + \sigma I_i$, $I_j + \sigma I_j$ and $I_k - \sigma I_k$ regarding the analytical component i and the correction components j and k, a content $W_i$ of the analytical component i from the calibration curve equations (1) to (3) for the analytical component i and the correction components j and k. That is, $I_i$ is substituted with $I_i + \sigma I_i$, $I_j$ is substituted with $I_j + \sigma I_j$, and $I_k$ is substituted with $I_k - \sigma I_k$, to obtain a content $W_i$ of the analytical component i. Then, with this content $W_i$ of the analytical component i being regarded as a second quantitative value $Q_{i2}$, the quantification unit 13 causes a displaying unit 15 (such as a liquid crystal display) connected to the controller 11 to display, as a quantitative-value theoretical standard deviation $\sigma Q_i$, a difference $|Q_{i2} - Q_{i1}|$ between the first quantitative value $Q_{i1}$ and the second quantitative value $Q_{i2}$.

In the X-ray fluorescence spectrometer according to the present embodiment, the quantification unit 13 causes the displaying unit 15 to display, as the quantitative-value theoretical standard deviation $\sigma Q_i$ regarding the analytical component i, the difference $|Q_{i2} - Q_{i1}|$ between the first quantitative value $Q_{i1}$ of the analytical component i based on the measured intensities $I_i$, $I_j$ and $I_k$ regarding the respective components i, j and k and the second quantitative value $Q_{i2}$ of the analytical component i based on $I_i + \sigma I_i$, $I_j + \sigma I_j$ and $I_k - \sigma I_k$ which are respectively obtained by causing, in the calibration curve equations (1) to (3) for the respective components i, j and k, the measured intensities $I_i$, $I_j$ and $I_k$ to fluctuate in the direction in which change in the content $W_i$ of the analytical component i increases. Here, the fluctuation of the measured intensities $I_i$, $I_j$ and $I_k$ is caused without considering, in the calibration curve equation (2) for the correction component j, change in the content $W_k$ of an additional correction component, i.e., the correction component k. The reason why the measured intensity $I_k$ is caused to fluctuate in consideration of change in the content $W_k$ of the component k in the above example, is because the component k serves as an overlap correction component with respect to the analytical component i in the calibration curve equation (1) for the analytical component i, and is not because the component k serves as an additional correction component with respect to the correction component j in the calibration curve equation (2) for the correction component j. In this manner, the number of the measured intensities to be caused to fluctuate is appropriately limited, whereby the quantitative-value theoretical standard deviation regarding the analytical component i can be obtained and displayed within an allowable time without actually performing analysis iteratively, with influences of the correction components j and k being appropriately reflected.

The quantification unit 13 of the X-ray fluorescence spectrometer according to the present embodiment can also obtain contents of the components in the sample 1, 14 by employing a fundamental parameter method that includes overlap correction. In this case, a quantitative-value theoretical standard deviation is obtained as follows. First, the quantification unit 13 obtains, on the basis of a set of measured intensities $I_i$ regarding respective components i, a set of contents $W_i$ of respective components i from a set of publicly-known theoretical intensity equations for respective components i in the same manner as in a conventional quantification unit. Then, the obtained contents $W_i$ of the respective components i are regarded as first quantitative values $Q_{i1}$.

Here, in the case of the fundamental parameter method, correction of all components in a sample is considered in relation to absorption/excitation. In addition, overlap correction is also considered for an instrument sensitivity curve as described in the explanations in "(Description of Related Art)". Thus, it is necessary to: clarify each of correction components j as to whether the correction component j has absorbed or excited an analytical line (fluorescent X-rays corresponding to an analytical component i); and determine whether to increase or decrease an analytical line intensity (measured intensity $I_j$) regarding the correction component j. Considering this necessity, an analytical line theoretical intensity $I_{Tij}$ regarding the analytical component i is calculated with a content $W_j$ of each of the components j in the sample other than the analytical component i being changed one by one by a predetermined amount with respect to a sample composition based on the first quantitative values $Q_{i1}$ of the respective components i. Then, when the analytical line theoretical intensity $I_{Tij}$ is higher than an analytical line theoretical intensity $I_{Ti0}$ in the sample composition based on the first quantitative values $Q_{i1}$ of the respective components i, it is determined that the correction component j has excited the analytical line. Meanwhile, when the analytical line theoretical intensity $I_{Tij}$ is lower than the analytical line theoretical intensity $I_{Ti0}$, it is determined that the correction component j has absorbed the analytical line.

Furthermore, in the case where the correction component j has excited the analytical line, the analytical line intensity $I_j$ regarding this correction component j is decreased by a predetermined amount. Meanwhile, in the case where the correction component j has absorbed the analytical line, the analytical line intensity $I_j$ regarding this correction component j is increased by the predetermined amount. Here, the intensities $I_j$ of the analytical lines of all the components j other than the analytical component i in the sample may be caused to fluctuate, to perform quantification calculation for obtaining a second quantitative value $Q_{i2}$ described later. However, by setting a threshold value for the change amount of the analytical line intensity $I_{Tij}$ relative to change in the content $W_j$ of each of the correction components j and performing, for a correction component j having a change amount equal to or smaller than the threshold value, quantification calculation without changing the analytical line of the correction component j, the time for calculation can be shortened.

For example, if a component i, a component j and a component k are assumed to be present in the sample, contents $W_i$, $W_j$ and $W_k$ of the respective components i, j and k are, for a composition in the sample, obtained first from measured intensities $I_i$, $I_j$ and $I_k$ by employing the fundamental parameter method. The analytical line theoretical intensity regarding the component i in this composition is defined as $I_{Ti0}$. Then, a theoretical intensity is calculated with the content $W_j$ of the component j being changed by a predetermined amount, and the analytical line theoretical intensity regarding the component i at this time is defined as $I_{Tij}$. When $I_{Tij}$ is higher than $I_{Ti0}$, the component j has excited the analytical line of the component i. Then, the analytical line intensity $I_j$ regarding the correction component j is decreased by a predetermined amount. A similar processing is performed on the component k as well, to determine whether to increase or decrease the analytical line intensity $I_k$ regarding the correction component k by a predetermined amount.

The above description is summarized as follows. That is, the quantification unit 13 of the X-ray fluorescence spectrometer according to the present embodiment increases, in each of the theoretical intensity equations for the respective components i, the content $W_j$ of each of the components j other than the analytical component one by one by a predetermined amount. Then, the quantification unit 13 causes, when the theoretical intensity $I_{Ti}$ regarding the analytical component i increases to have a value equal to or larger than a predetermined threshold value as a result of the increase in the content $W_j$, fluctuation so as to decrease the measured intensity $I_j$ regarding the component j other than the analytical component by a predetermined amount. Meanwhile, the quantification unit 13 causes, when the theoretical intensity $I_{Ti}$ regarding the analytical component i decreases to have a value equal to or smaller than a predetermined threshold value as a result of the increase in the content $W_j$, fluctuation so as to increase the measured intensity $I_j$ regarding the component j other than the analytical component by the predetermined amount.

Here, the predetermined amounts by which the respective measured intensities $I_i$, $I_j$ and $I_k$ are caused to fluctuate are theoretical standard deviations $\sigma I_i$, $\sigma I_j$ and $\sigma I_k$ of the respective measured intensities $I_i$, $I_j$ and $I_k$ and are each obtained by using the measurement time $t_{meas}$, according to $\sigma I = (I/1000 t_{meas})^{1/2}$. Also, the predetermined amount by which the content $W_j$ of the component j other than the analytical component is increased is, for example, $W_j \times 0.01$, the theoretical intensity $I_{Ti}$ being equal to or larger than a predetermined threshold value means that the theoretical intensity $I_{Ti}$ is equal to or larger than, for example, $I_{Ti} \times 1.01$, and the theoretical intensity $I_{Ti}$ being equal to or smaller than a predetermined threshold value means that the theoretical intensity $I_{Ti}$ is equal to or smaller than, for example, $I_{Ti} \times 0.99$.

Moreover, the quantification unit 13 obtains, on the basis of the set of, the measured intensities $I_i$ regarding the respective components I, and post-fluctuation measured intensities $I_i + \sigma I_i$ or $I_i - \sigma I_i$ regarding the respective components i, the set of contents $W_i$ of the respective components i from the set of theoretical intensity equations for the respective components i. Then, with the obtained contents $W_i$ of the respective components i being regarded as respective second quantitative values $Q_{i2}$, the quantification unit 13 causes the displaying unit 15 to display, as a quantitative-value theoretical standard deviation $\sigma Q_i$, the difference $|Q_{i2} - Q_{i1}|$ between the first quantitative value $Q_{i1}$ and the second quantitative value $Q_{i2}$ of each of the components i.

In a case where the quantification unit 13 employs the fundamental parameter method that includes overlap correction, the X-ray fluorescence spectrometer according to the present embodiment is as follows. That is, the quantification unit 13 causes the displaying unit 15 to display, as the quantitative-value theoretical standard deviation $\sigma Q_i$, the difference between the first quantitative value $Q_{i1}$ based on the measured intensity $I_i$ regarding each of the components i and the second quantitative value $Q_{i2}$ obtained by causing the measured intensities $I_j$ and $I_k$, which inflict significant influences on the theoretical intensity $I_{Ti}$ regarding the analytical component i in the theoretical intensity equation for the component i, to fluctuate in the direction in which the content $W_i$ of the analytical component i increases. Consequently, the quantitative-value theoretical standard deviation $\sigma Q_i$ can be obtained and displayed within an allowable time without actually performing analysis iteratively, with influences of the correction components j and k being appropriately reflected.

Although the present invention has been fully described in connection with the preferred embodiment thereof with reference to the accompanying drawing which is used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein. [

Reference Numerals]

| | |
|---|---|
| 1, 14 | sample |
| 3 | primary X-rays |
| 5 | fluorescent X-rays |
| 13 | quantification unit |
| 15 | displaying unit |

**Claims**

1. An X-ray fluorescence spectrometer comprising a quantification unit in which a calibration curve method that involves performing absorption/excitation correction and overlap correction is employed, the X-ray fluorescence spectrometer being configured to irradiate a sample with primary X-rays and obtain a content of a component in the sample by the quantification unit on the basis of measured intensities of fluorescent X-rays generated through the irradiation, wherein
the quantification unit

obtains, on the basis of measured intensities regarding an analytical component and a correction component, a content of the analytical component from calibration curve equations for the analytical component and the correction component, the content being regarded as a first quantitative value,
causes, in the calibration curve equation for the analytical component, the measured intensity regarding the analytical component to fluctuate by a predetermined amount in a direction in which the content of the analytical component increases or decreases,
causes, in the calibration curve equation for the correction component, the measured intensity regarding the correction component to fluctuate by a predetermined amount in a same direction as the direction in which the measured intensity regarding the analytical component has been caused to fluctuate,
obtains, on the basis of the measured intensities regarding the analytical component and the correction component and post-fluctuation measured intensities regarding the analytical component and the correction component, a content of the analytical component from the calibration curve equations for the analytical component and the correction component, the content being regarded as a second quantitative value, and
causes a displaying unit to display, as a quantitative-value theoretical standard deviation, a difference between the first quantitative value and the second quantitative value.

2. An X-ray fluorescence spectrometer comprising a quantification unit in which a fundamental parameter method that includes overlap correction is employed, the X-ray fluorescence spectrometer being configured to irradiate a sample with primary X-rays and obtain a content of a component in the sample by the quantification unit on the basis of measured intensities of fluorescent X-rays generated through the irradiation, wherein
the quantification unit

obtains, on the basis of measured intensities regarding respective components, contents of the respective components from theoretical intensity equations for the respective components, the contents being regarded as first quantitative values,
increases, in each of the theoretical intensity equations for the respective components, a content of each of components other than an analytical component one by one by a predetermined amount,
causes, when a theoretical intensity regarding the analytical component increases to have a value equal to or larger than a predetermined threshold value, fluctuation so as to decrease the measured intensity regarding the component other than the analytical component by a predetermined amount,
causes, when the theoretical intensity regarding the analytical component decreases to have a value equal to or smaller than a predetermined threshold value, fluctuation so as to increase the measured intensity regarding the component other than the analytical component by the predetermined amount,

obtains, on the basis of the measured intensities regarding the respective components and post-fluctuation measured intensities regarding the respective components, contents of the respective components from the theoretical intensity equations for the respective components, the contents being regarded as second quantitative values, and

causes a displaying unit to display, as a quantitative-value theoretical standard deviation, a difference between the first quantitative value and the second quantitative value of each of the components.

Fig. 1

## INTERNATIONAL SEARCH REPORT

International application No.

**PCT/JP2024/005270**

| A. | CLASSIFICATION OF SUBJECT MATTER |
|---|---|

*G01N 23/223*(2006.01)i; *G01N 23/2209*(2018.01)i
FI:    G01N23/223; G01N23/2209

According to International Patent Classification (IPC) or to both national classification and IPC

| B. | FIELDS SEARCHED |
|---|---|

Minimum documentation searched (classification system followed by classification symbols)

G01N23/00-G01N23/2276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2006-275892 A (SHIMADZU CORPORATION) 12 October 2006 (2006-10-12) | 1-2 |
| A | JP 2000-275195 A (RIGAKU INDUSTRIAL CORPORATION) 06 October 2000 (2000-10-06) | 1-2 |
| A | JP 2004-212406 A (RIGAKU INDUSTRIAL CORPORATION) 29 July 2004 (2004-07-29) | 1-2 |
| A | JP 2021-51053 A (RIGAKU CORP.) 01 April 2021 (2021-04-01) | 1-2 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/005270**

| Patent document cited in search report | Publication date (day/month/year) | Patent family member(s) | Publication date (day/month/year) |
|---|---|---|---|
| JP 2006-275892 A | 12 October 2006 | (Family: none) | |
| JP 2000-275195 A | 06 October 2000 | (Family: none) | |
| JP 2004-212406 A | 29 July 2004 | (Family: none) | |
| JP 2021-51053 A | 01 April 2021 | WO 2021/059597 A1<br>CN 113748333 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023027359 A
- JP 2021051053 A
- WO 2018168939 A
- JP 2000065765 A